# FASCICULE DE BREVET EUROPEEN

(11) **EP 0 855 652 B1**
(45) Date de publication et mention de la délivrance du brevet: **12.12.2007**
(21) Numéro de dépôt: 97403088.4
(22) Date de dépôt: 19.12.1997
(51) Int. Cl.: G06F 12/14

(54) **Procédé de préservation de l'intégrité de données logiciel**
Verfahren zur Bewahrung der Vollständigkeit von Software
Method of preserving software integrity

(30) Priorité: 28.01.1997 FR 9700888
(43) Date de publication de la demande: 29.07.1998
(73) Titulaire: SAGEM Défense Sécurité, 75015 Paris (FR)
(72) Inventeur: Chabanne, Hervé, 78200 Mantes La Jolie (FR); Lamiaux, Sylves, 76760 Ancretieville Saint Victor (FR)
(74) Mandataire: Bloch, Gérard

(56) Documents cités:
- EP-A- 0 402 210
- EP-A- 0 455 064
- EP-A- 0 681 242
- EP-A- 0 718 756
- GB-A- 2 264 373
- US-A- 4 319 079

## Description

Le domaine de l'invention est celui de la protection d'informations, de données, présentant un caractère confidentiel pendant leur stockage et leur transmission.

Il peut s'agir, par exemple, de données bancaires, comptables, industrielles....

Pour assurer la protection, c'est à dire la confidentialité, on utilise des procédés d'embrouillage, ou de cryptage, dits cryptographie.

La cryptographie met en oeuvre des algorithmes, mis en oeuvre par des logiciels, et des clés. Mais il faut aussi assurer la protection de ces moyens de protection, c'est-à-dire éviter que les clés ne soient divulguées et que les logiciels cryptographiques ne soient modifiés.

En cas d'altération d'un logiciel cryptographique, tout ou partie des clés associées ou des données à protéger pourraient devenir accessibles à des tiers, sans même que l'utilisateur ne puisse s'en rendre compte.

La protection des clés cryptographiques ne pose plus beaucoup de difficultés aujourd'hui. Des méthodes multiples et variées existent.

La présente invention concerne en particulier la protection des logiciels cryptographiques et, au-delà et en général, la protection des logiciels.

Pour assurer aujourd'hui l'intégrité d'un logiciel, de façon classique, on le matérialise. Pour modifier à l'insu de l'utilisateur ce matériel, essentiellement des composants électroniques, il faut disposer de moyens importants, trop importants, mais la matérialisation d'un logiciel est-elle-même aussi onéreuse.

La demanderesse a donc cherché à sécuriser les logiciels sans les matérialiser.

Un logiciel, pour être mis en oeuvre, doit être associé à des données, qu'on qualifiera de données d'exploitation. Il peut s'agir de clés cryptographiques, pour les logiciels cryptographiques, mais il peut aussi s'agir, par exemple, de valeurs de paramètres d'exploitation pour des logiciels de nature différente.

L'invention propose ainsi un procédé de préservation de l'intégrité de données d'un fichier représentatif d'un logiciel, dites données logiciel, destinées à être mises en oeuvre par des données d'exploitation, caractérisé par le fait qu'on dérive, des données logiciel à préserver, une clef d'accès et on crypte les données d'exploitation par la clef d'accès.

Dans le cas où un tiers viendrait à altérer les données logiciel, il ne pourrait pas obtenir la clef d'accès permettant le décryptage des données d'exploitation, anéantissant ainsi tout espoir de mise en oeuvre des données logiciel.

Outre le fait que, selon l'invention, on protège un logiciel de façon non plus matérielle, mais logique, l'invention est remarquable par le fait que la clef qui permet l'accès au logiciel à protéger est élaborée à partir du logiciel lui-même.

On remarquera que le document GB 2 264 373 propose un dispositif de cryptage de données à stocker, mais par lequel les données sont scindées en blocs de données et les blocs sont cryptés selon des clés déduites d'une clé unique et de chaque adresse de stockage. Il ne concerne donc pas l'intégrité du dispositif de cryptage, et donc pas davantage de son logiciel.

Pour augmenter le degré de sécurité, on ne dérive la clef d'accès que d'une partie prédéterminée des données logiciel.

Même si un tiers parvenait à saisir l'intégrité du logiciel, qu'il soit ou non crypté, il en connaîtrait pas celles de ses données lui permettant d'obtenir la clef d'accès aux données de mise en oeuvre de ce logiciel.

A un degré supérieur encore, on peut vouloir dériver la clef d'accès d'une empreinte, ou condensé, des données logiciel considérées qu'on déduit de celles-ci par une fonction cryptographique irréversible.

Avantageusement, on dérive la clef d'accès des données logiciel et d'une clef de lecture.

De préférence, les données logiciel desquelles on dérive la clef d'accès sont obtenues à partir d'un adressage crypté.

De préférence toujours, on décrypte l'adressage des données logiciel, desquelles on dérive la clef d'accès, à l'aide de la clef de lecture.

Plus avantageusement encore, on dérive la clef de lecture d'une clef de base à laquelle on accède par un mot de passe.

L'invention sera mieux comprise à l'aide de la description suivante de l'organigramme du processus d'accès à des données d' exploitation de données logiciel préservées selon le procédé de l'invention, en référence à la représentation en annexe de cet organigramme.

Les données logiciel sécurisées 13 sont en l'espèce mémorisées, ici en partie en clair, en partie cryptées, dans une mémoire d'un support, qui peut être une carte, à des adresses respectives déterminées 15 de cette mémoire. Ces adresses ont été cryptées (opération inverse du cryptage11) par une clef de lecture 5.

Des données 26 de mise en oeuvre des données logiciel 13 sont également stockées19 dans la mémoire, après cryptage (opération inverse du décryptage 20) par une clef d'accès 18.

La clef d'accès 18 a été dérivée de la clef de lecture 5, d'une part, et d'une empreinte, ou condensé,16 de l'ensemble des données logiciel 13, d'autre part.L'empreinte16 est constituée d'une série de données logiciel, tirées de l'ensemble 13 par correspondance avec une série d'adresses particulières15.

Pour accéder aux données de mise en oeuvre 26, on peut, par exemple, utiliser un lecteur du support ,a priori intégré à un poste d'exploitation des données logiciel,en combinaison avec un organe de saisie. Il peut s'agir, pour le poste d'exploitation, d'un ordinateur personnel, et pour l'organe de saisie, du clavier de l'ordinateur personnel.

La première phase du processus d'accès aux données de mise en oeuvre 26,qui va maintenant être décrite,consiste à dériver la clef de lecture 5 à partir du mot de passe 10.

Dans le support, et dans l'exemple considéré, sont également mémorisées, sous forme cryptée, une clef de base 6 servant d'élément de test, et la clef de lecture 3. Toujours dans l'exemple considéré, les deux clefs de base 8 et de lecture 5 sont protégées pour avoir été cryptées mutuellement l'une avec l'autre. La clef de base 8 doit normalement correspondre au mot de passe 10 transformé (1) par une fonction cryptographique irréversible. En d'autres termes, la connaissance par un tiers de la clef de base 8 ne lui permet pas pour autant de connaître le mot de passe 10.

Pour dériver la clef de lecture 5, l'utilisateur, après avoir introduit son support de données et de clefs dans le lecteur de l'ordinateur, saisit sur le clavier son mot de passe 10 dont la validité va être testée.

Le mot de passe 10 est transformé (1) en une clef de test primaire 2, qui devrait être la clef de base. La clef de lecture cryptée 3 est décryptée (4) avec la clef de test primaire pour donner une clef de test secondaire 5, qui devrait être la clef de lecture. La clef de base cryptée mémorisée 6 est décryptée (7) avec la clef de test secondaire 5 pour donner une clef de test tertiaire 8, qui devrait être la clef de base. Les clefs de test primaire 2 et tertiaire 8 sont comparées (9).

En cas de non identité, le mot de passe est incorrect et la mise en oeuvre des données reste préservée (11) En cas d'identité, la clef de test secondaire est bien la clef de lecture qui a ainsi été dérivée.

On notera que l'intérêt de ces diverses clefs et du test est bien d'assurer une fonction de protection. En effet, un tiers, qui viendrait à connaître la clef de lecture, n'en déduirait pas pour autant la clef de base et le mot de passe.

La clef de lecture 5 ayant été dérivée, on décrypte (11), avec cette clef de lecture 5, une série 12 d'adresses particulières d'une partie des données logiciel 13 puis, par une fonction cryptographique irréversible 14, on tire des données logiciel 13 des adresses décryptées 15, une empreinte , ou condensé, 16 de ces données logiciel. On poursuit en dérivant (17), de cette empreinte 16 et de la clef de lecture 5,une clef d'accès 18.

Les données 19 de mise en oeuvre des données logiciel sont stockées en mémoire sous forme cryptée, après cryptage par la clef d'accès18. Avant de les décrypter (20), on teste (21) la validité de la clef d'accès 18, telle que dérivée précédemment.

Pour tester cette validité, on décrypte (22) par la clef d'accès 18 des données de test cryptées et mémorisées 23 pour obtenir des données de test 24 qu'on compare (25) avec certaines des données logiciel à protéger 13.

En cas de non identité, la mise en oeuvre des données d'exploitation 19 reste préservée. En cas d'identité, la clef 18 dérivée du condensé 16 est bien la clef d'accès. Les données d'exploitation cryptées 19 peuvent alors être décryptées (20) par la clef d'accès 18 pour obtenir les données 26 de mise en oeuvre des données logiciel 13.

On remarquera que la validation des clefs de lecture 5 et d'accès 18 est illustrée, sur l'organigramme, par la fermeture des interrupteurs symboliques 27, 28.

Pour le cas où l'intégrité des données logiciel 13 pourrait avoir été altérée et la clef dérivée du condensé 16 être incorrecte mais où, par hasard, le test de validité 21 s'avèrerait positif, on peut prévoir le décryptage d'un fichier à contenu connu et qui ne peut être obtenu qu'avec de bonnes données logiciel.

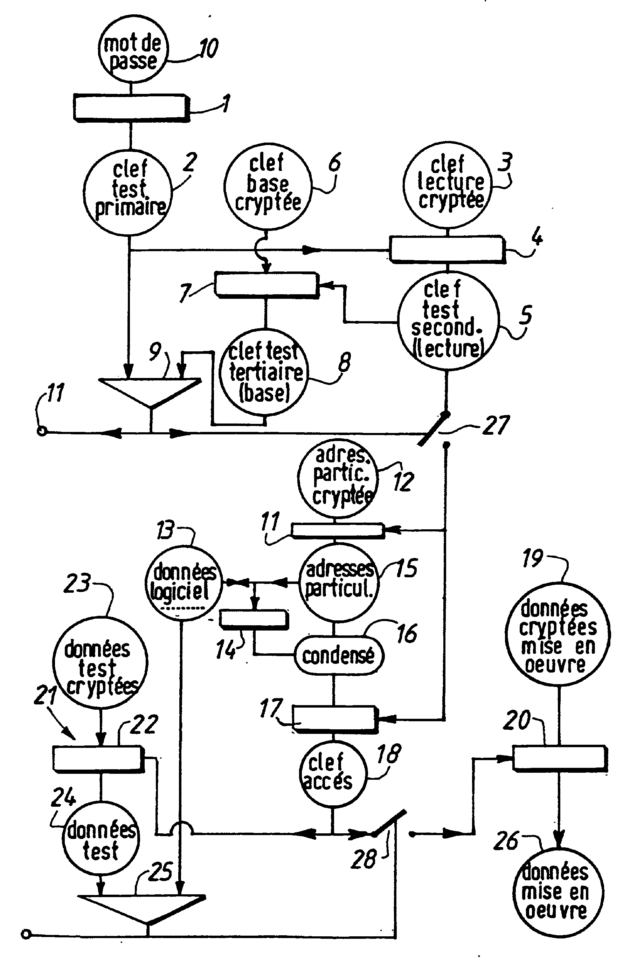

## Revendications

1. Procédé de préservation de l'intégrité de données (13) d'un fichier représentatif d'un logiciel, dites données logiciel, destinées à être mises en oeuvre par des données d'exploitation (26), **caractérisé par le fait qu'**on dérive (17), des données logiciel à préserver (13), une clef d'accès (18) et on crypte (20,19) les données d'exploitation (26) par la clef (18).

2. Procédé selon la revendication 1, dans lequel on ne dérive la clef d'accès (18) que d'une partie prédéterminée (16) des données logiciel (13).

3. Procédé selon la revendication 2, dans lequel on dérive la clef d'accès (18) d'un condensé (16) des données logiciels (13) qu'on déduit de celles-ci (13) par une fonction cryptographique irréversible (14).

4. Procédé selon l'une des revendications 1 à 3, dans lequel on dérive la clef d'accès (18) des données logiciel (13) et d'une clef de lecture (5).

5. Procédé selon l'une des revendications 1 à 4, dans lequel les données logiciel desquelles on dérive la clef d'accès (18) sont obtenues à partir d'un adressage crypté (12).

6. Procédé selon l'une des revendications 4 et 5, dans lequel on décrypte (11) l'adressage (12) des données logiciel (13), desquelles on dérive la clef d'accès (18), à l'aide de la clef de lecture (5).

7. Procédé selon l'une des revendications 4 à 6, dans lequel on dérive la clef de lecture (5) d'une clef de base (2,8).

8. Procédé selon la revendication 7, dans lequel on accède à la clef de base (2,8) par un mot de passe (10).

## Claims

1. Method of preserving the integrity of data (13) of a file representative of software, so-called software data, which are intended to be used by operating data (26), **characterised in that** an access key (18) is derived (17) from the software data (13) to be preserved and the operating data (26) are encrypted (20, 19) by the key (18).

2. Method as claimed in claim 1, wherein the access key (18) is derived from only a predetermined part (16) of the software data (13).

3. Method as claimed in claim 2, wherein the access key (18) is derived from a digest (16) of the software data (13) which is deduced therefrom (13) by an irreversible cryptographic function (14).

4. Method as claimed in any one of claims 1 to 3, wherein the access key (18) is derived from the software data (13) and from a reading key (5).

5. Method as claimed in any one of claims 1 to 4, wherein the software data from which the access key (18) is derived are obtained from encrypted addressing (12).

6. Method as claimed in any one of claims 4 and 5, wherein the reading key (5) is used to decrypt (11) the addressing (12) of the software data (13) from which the access key (18) is derived.

7. Method as claimed in any one of claims 4 to 6, wherein the reading key (5) is derived from a base key (2, 8).

8. Method as claimed in claim 7, wherein the base key (2, 8) is accessed by a password (10).

## Patentansprüche

1. Verfahren zum Schutz der Unversehrtheit von Daten (13) einer eine Software darstellenden Datei, Softwaredaten genannt, die dazu bestimmt sind, von Betriebsdaten (26) eingesetzt zu werden, **dadurch gekennzeichnet, dass** man von den zu schützenden Softwaredaten (13) einen Zugangsschlüssel (18) ableitet (17) und die Betriebsdaten (26) durch den Schlüssel (18) verschlüsselt (20, 19).

2. Verfahren nach Anspruch 1, bei dem man den Zugangsschlüssel (18) nur von einem vorbestimmten Teil (16) der Softwaredaten (13) ableitet.

3. Verfahren nach Anspruch 2, bei dem man den Zugangsschlüssel (18) von einem Kondensat (16) der Softwaredaten (13) ableitet, das man von diesen (13) durch eine irreversible Verschlüsselungsfunktion (14) ableitet.

4. Verfahren nach einem der Ansprüche 1 bis 3, bei dem man den Zugangsschlüssel (18) von den Softwaredaten (13) und von einem Leseschlüssel (5) ableitet.

5. Verfahren nach einem der Ansprüche 1 bis 4, bei dem die Sofwaredaten, von denen man den Zugangsschlüssel (18) ableitet, aus einer verschlüsselten Adressierung (12) erhalten werden.

6. Verfahren nach einem der Ansprüche 4 und 5, bei dem man die Adressierung (12) der Softwaredaten (13), von denen man den Zugangsschlüssel (18) ableitet, mit Hilfe des Leseschlüssels (5) entschlüsselt (11).

7. Verfahren nach einem der Ansprüche 4 bis 6, bei dem man den Leseschlüssel (5) von einem Basisschlüssel (2, 8) ableitet.

8. Verfahren nach Anspruch 7, bei dem man auf den Basisschlüssel (2, 8) durch ein Passwort (10) zugreift.
